**Europäisches Patentamt**

**European Patent Office**

**Office européen des brevets**

(19)

(11) Veröffentlichungsnummer: **0 008 621**

**A1**

(12) # EUROPÄISCHE PATENTANMELDUNG

(21) Anmeldenummer: **79102092.8**

(22) Anmeldetag: **25.06.79**

(51) Int. Cl.³: **B 07 B 1/24**
B 03 B 9/06, B 02 C 18/40

(30) Priorität: **12.09.78 DE 2839604**

(43) Veröffentlichungstag der Anmeldung:
**19.03.80 Patentblatt 80/6**

(84) Benannte Vertragsstaaten:
**AT BE CH FR GB IT LU NL SE**

(71) Anmelder: **Voelskow, Peter**
**Kiefernweg 17**
**D-6550 Bad Kreuznach(DE)**

(72) Erfinder: **Voelskow, Peter**
**Kiefernweg 17**
**D-6550 Bad Kreuznach(DE)**

(54) **Durch eingebaute Zerkleinerungselemente klassierende und sortierende Trommelsiebmaschine, insbesondere für Hausmüll.**

(57) Durch eingebaute Zerkleinerungselemente klassierende und sortierende Trommelsiebmaschine, insbesondere für Hausmüll.

Die Siebtrommel hat einen großen Durchmesser und ist relativ dazu sehr kurz. Die Trommeldrehzahl ist relativ hoch. Gefüllte Müllsäcke und gepreßte Ballen werden durch sägezahnförmige Mitnehmerbleche zwischen den Siebsegmenten aufgerissen. Das Siebgut wird in der kurzen Trommel durch blendenförmige Einbauten bzw. Ein- und Auslaßöffnungen an zu schnellem axialen Durchlauf gehindert. Spröde Hartstoffe werden in der Trommel durch ein Prallflächen-Flügelrad im Bereich des herabfallenden, in der Trommel umgewälzten Gutstromes selektiv zerkleinert und z.B. zusammen mit Feingut und Küchenabfall durch geeignete Sieblochung ausgeschieden. Etwa an den Stegen zwischen den Sieblöchern hängen bleibende Textilabfälle, Folien oder Gartensträucher werden auf S-förmige Haken aufgespießt, die auf einer durch die Trommel gehenden Welle aufgereiht sind und periodisch durch einen Abstreifkamm geschwenkt werden, der dieses Verstopfungsgut wieder in die Trommel zurück leitet. Aufgeweichtes Papier kann durch Rührwerksarme an einer durch die Trommel hindurchgeführten Welle selektiv zerkleinert und durch absieben ausgeschieden werden.

./...

.l...

Fig. 3

Fig. 7

## Durch eingebaute Zerkleinerungselemente klassierende und sortierende Trommelsiebmaschine, insbesondere für Hausmüll

Die Erfindung betrifft eine Trommelsiebmaschine, insbesondere für Hausmüll oder hausmüllähnliche Gewerbemüllabfälle, die durch eingebaute Zerkleinerungselemente neben einer klassierenden auch eine sortierende Wirkung hat.

Im allgemeinen ist durch eine Siebmaschine nur eine Klassierung und keine Sortierung von Stoffgemischen möglich. (Siehe Band 1, Abfallwirtschaft an der Technischen Universität Berlin "Materialrecycling aus Haushaltsabfall", herausgegeben von O. Prof. Dipl.-Ing. Bernhard Jäger und Prof. Dr.-Ing. K.J. Thomé-Kozmiensky, Seiten 254 bis 274. Thema des veröffentlichten Referates: "Anwendungsmöglichkeiten von verschiedenartigen Sieben in Verfahren zur Sortierung von Haushaltsabfällen" von Peter Voelskow, Bad Kreuznach.)

Erst die selektive Zerkleinerung einzelner Stoffgruppen ermöglicht gewisse Sortiervorgänge auch mit einer Siebmaschine.

Außerdem muß zu einer Klassierung oder klassierenden Sortierung von Abfallgemischen vorher eine Teilzerkleinerung gepreßter Ballen, gefüllter Papier- und Plastiksäcke oder dergl. vorgenommen werden. Diese Vorzerkleinerung und Auflockerung bzw. Vereinzelung des gesamten Abfallgemisches erfordert bisher einen zusätzlichen Aufwand.

Alle Siebmaschinen, auch Trommelsiebmaschinen für Haushaltsabfälle, neigen leicht zu Verstopfungen durch das außerordentlich heterogene Material. Zur Reinigung von Trommelsiebmaschinen sind rotierende Bürstenwalzen bekannt, die den Innenumfang des Trommelsiebes und ggf. auch den Außenumfang desselben kontinuierlich abbürsten und dadurch reinigen. (Siehe in o.g. Band 1, Abfallwirtschaft an der Technischen Universität Berlin, Seite 263.) Derartige Reinigungsvorrichtungen konnten bisher nur bei relativ kleinen Trommelsiebanlagen mit relativ kleiner Sieblochung in der Praxis angewendet werden. Bei bisher üblichen Trommelsiebbauarten mit einer mehrfachen Länge gegenüber dem Trommeldurchmesser werden bei größeren Durchsatzleistungen Trommelsiebe von 8 bis 12 m Länge benötigt, es ist selbstverständlich, daß bei einer derartigen Trommelsieblänge eine axparallel umlaufende Reinigungsbürste innerhalb des Trommelsiebes aus schwingungstechnischen Gründen für die Welle der Reinigungsbürste nicht mehr zu verwirklichen ist. Außerdem kann die Reinigungsbürste nur für vorzerkleinerten Müll und für relativ kleine Sieblochungen angewendet werden, bei unzerkleinertem oder lediglich aufgerissenem Müllgemisch würden sich größere Textilabfälle oder Folien um die Reinigungsbürste herumwickeln.

Aus diesen bisherigen Problemen ergibt sich folgende Aufgabenstellung: Eine Trommelsiebmaschine zur sortierenden Klassierung von Siedlungsabfällen oder hausmüllähnlichen Gewerbeabfällen muß so gestaltet werden, daß auch bei großer Sieboberfläche und großer Durchsatzleistung die Anordnung von Reinigungselementen innerhalb der Trommel und ggf. zusätzlich die Anordnung von selektiv wirksamen Zerkleinerungselementen innerhalb der Trommel möglich ist. Zusätzlich müssen Zerkleinerungselemente angeordnet sein, die das Aufreißen von Plastik- oder Papiersäcken, von Plastikbeuteln oder von gepreßten Müllballen bewirken. Darüber hinaus muß eine derartige Trommelsiebmaschine auch die klassierende Sortierung von unzerkleinertem Rohmüll vornehmen können, da die Zerkleinerungskosten für Müll ganz erheblich sind. Aus diesem Grunde müssen auch Reinigungsvorrichtungen gefunden werden, die bei sehr großen Sieblochungen die in den Stegen zwischen den Sieblöchern hängenbleibenden Textilabfälle, Folien, Gartensträucher und dergl. kontinuierlich und selbsttätig entfernen und dadurch den Siebbelag praktisch sauberhalten.

Die Erfindung löst die Aufgabe durch eine mit eingebauten Zerkleinerungselementen klassierende und sortierende Trommelsiebmaschine, insbesondere für Hausmüll, in die auch
axparallel eingebaute, umlaufende Reinigungsbürsten eingebaut werden können, mit folgenden Merkmalen:

a) Das Verhältnis von Trommeldurchmesser zu Trommel-Länge
liegt vorzugsweise im Bereich zwischen 1:1 und 1:2.

b) Die Umfangsgeschwindigkeit bzw. Drehzahl der Trommel entspricht einem Wert, der nur etwa 20 bis 50 % unter der
"Schleuderdrehzahl" liegt, bei der alle Teile am Trommelinnenumfang fest "kleben" bleiben würden.

c) Zur Zerkleinerung von Papier- und Plastik-Säcken oder
-Beuteln und gepreßter Ballen sowie zur verbesserten Gutumwälzung in der Trommel sind zwischen Siebsegmenten des
Trommelumfanges axial streifenförmig aufgereiht Mitnehmerbleche wie nach innen gerichtete, scharfkantige Sägezähne angeordnet.

d) Zu weiteren, ggf. selektiv wirksamen Zerkleinerungsaufgaben sowie zu teilweise an sich bekannten Reinigungszwecken sind axparallele Bearbeitungswellen, ggf. exzentrisch zur Trommelachse, in der Trommel angeordnet und
stirnseitig außerhalb der Trommel am Gestell gelagert.

e) Am Ein- und Auslauf sowie zwischen eventuellen axial abgeteilten Sieb-Sektionen mit unterschiedlicherLochung
ist das Siebgut nach außen oder zwischen den Sektionen
innerhalb der Trommel durch flanschartige Blenden abgeteilt, deren Innendurchmesser kleiner ist als der Durchmesser des Siebtrommelmantels.

Zur selektiv wirksamen Zerkleinerung spröder Hartstoffe im
Abfallgemisch, wie Glas, Porzellan, Ziegelsteine aus Bauschutt etc., werden an einer mit mäßiger Geschwindigkeit
axparallel in der Trommel umlaufenden Bearbeitungswelle
Prallflächen bzw. Prallflügel angeordnet, die im herabfallenden Gutstrom innerhalb der Trommel wirksam sind.

Zur Reinigung der Siebsegmente vorzugsweise bei großer
Sieblochung von in den Stegen zwischen den Löchern hängenden Textilabfällen, Folien, Gartensträuchern etc. werden
auf einer Bearbeitungswelle aufgereihte, etwa S-förmig gestaltete und mit den sägezahnförmigen Mitnehmerblechen in
der Trommel kämmende Haken befestigt, deren Spitzen der
Trommeldrehrichtung entgegen weisen und die sich periodisch
durch eine Teildrehung der Bearbeitungswelle durch einen
Abstreifkamm bewegen.

Zur Zerkleinerung von durch Feuchtigkeit aufgeweichter
Papier- und Pappenabfälle im Müllgemisch werden an einer
oder mehreren Bearbeitungswellen Rührwerksarme angeordnet,
die mit den sägezahnförmigen Mitnehmerblechen am Trommelinnenumfang kämmen.

Zwischen den Endflanschen an den Trommelstirnseiten und den
Siebsegmenten werden ungelochte Längsträger angeordnet, an
deren dem Trommelinnenumfang in der Wölbung angepaßten
Innenseite die sägezahnförmigen Mitnehmerbleche reihenweise befestigt, z.B. angeschweißt sind.

Zwischen den stirnseitigen Endflanschen und ggf. die Trommel in mehrere Sektionen unterteilende Mittelflansche sowie den Längsträgern mit sägezahnförmigen Mitnehmerblechen
werden die Siebsegmente leicht auswechselbar, z.B. von
außen angeschraubt, angeordnet.

Die ungelochten Laufringe für die tragenden und antreibenden Laufräder - vorzugsweise als gummibereifte LKW- oder
Gabelstapler-Räder ausgebildet - sind außerhalb der Stirnflansche mit blendenförmiger Öffnung des Trommelinnenraumes
angeordnet und haben vorzugsweise einen kleineren Durchmesser als es dem Trommelsiebdurchmesser entspricht.

Die gestellten Aufgaben werden durch die Erfindung in einfacher Weise gelöst und es wird damit ein im Vergleich zu Windsichtanlagen oder dergl. außerordentlich robustes Gerät geschaffen, mit dem eine weitgehende Sortierung des außerordentlich heterogenen Abfallgemisches in Siedlungsabfällen und hausmüllähnlichen Gewerbemüllabfällen möglich ist.

Wesentlich ist hierbei die kompakte, kurze Bauweise der Siebtrommel selbst, wodurch es technisch auch bei größeren Durchsatzleistungen ohne weiteres möglich ist, Bearbeitungswellen für Zerkleinerungsvorgänge oder Reinigungsvorgänge axparallel durch die Trommel hindurchzuführen. Um bei dem großen Durchmesser der relativ geringen Trommellänge den axialen Durchlauf des Siebgutes zu begrenzen bzw. aufzuhalten, werden blendenförmige Flansche angewendet, die den Siebtrommelinnenraum sowohl nach außen als auch zwischen einzelnen Siebsektionen unterteilen.

Eine weitgehende Ausnutzung der Sieboberfläche wird durch eine besonders hohe Umfangsgeschwindigkeit der Trommel erreicht, wobei das Siebgut bis nahezu an den oberen Totpunkt des Trommelumfanges hochgehoben und durch die Trommelmitte herabgeworfen werden soll.

Bei dieser starken Umwälzung und Auflockerung des Siebgutes ist es möglich, in den herabfallenden Siebgutstrom an entsprechenden umlaufenden Bearbeitungswellen Prallflächen anzuordnen, die alle auf sie auftreffenden spröden Hartstoffe, wie Glas, Porzellan, Ziegelsteine aus Bauschutt etc., in kleine Krümel zerschlagen, so daß dieses selektiv zerkleinerte Gut abgesiebt werden kann. Auf diese mit mäßiger Geschwindigkeit umlaufende Prallflächen auftreffender sonstiger Müll aus organischen Bestandteilen oder Metallen wird hierbei praktisch nicht zerkleinert. Es tritt die gleiche Wirkung ein, als wenn der Hausmüll beispielsweise aus 10 m Höhe auf einen Steinboden herunterfällt.

Die Aufteilung des Trommelmantels in Siebsegmente und dazwischen die Endflansche der Trommel verbindende ungelochte Längsträger hat mehrere Vorteile:

1. können an diesen Längsträgern die sägezahnförmigen Mitnehmerbleche angeordnet, z.B. angeschweißt sein,
2. können in die rechteckigen, verbleibenden Öffnungen zwischen diesen Längsträgern und den Endflanschen bzw. eventuellen Mittelflanschen die Siebsegmente leicht auswechselbar, z.B. von außen anschraubbar, angeordnet werden.

Die Figuren erläutern die Erfindung an Schemabeispielen:
Figur 1 zeigt einen Querschnitt durch eine erfindungsgemäße
Trommelsiebmaschine, Figur 2 zeigt einen Längsschnitt in der
linken Hälfte gemäß der Linie A-A und in der rechten Hälfte
gemäß der Linie B-B.

Figur 3 zeigt den Längsschnitt durch eine erfindungsgemäße
Trommelsiebmaschine mit eingebautem Prallflächenflügelrad,
Figur 4 zeigt den Querschnitt durch die gleiche Anordnung.

Figur 5 zeigt den Längsschnitt durch eine erfindungsgemäße
Trommelsiebmaschine mit Rührwerksarmen an einer Bearbeitungswelle, beispielsweise zur Zerkleinerung von mit Feuchtigkeit
aufgeweichter Pappe bzw. von aufgeweichtem Papier und
Figur 6 zeigt den Querschnitt durch die gleiche Anordnung.

Figur 7 zeigt den Querschnitt durch ein nur schematisch angedeutetes Trommelsieb im Anschluß an eine Mischtrommel mit
auf einer Bearbeitungswelle reihenförmig angeordneten S-förmigen Reinigungshaken.

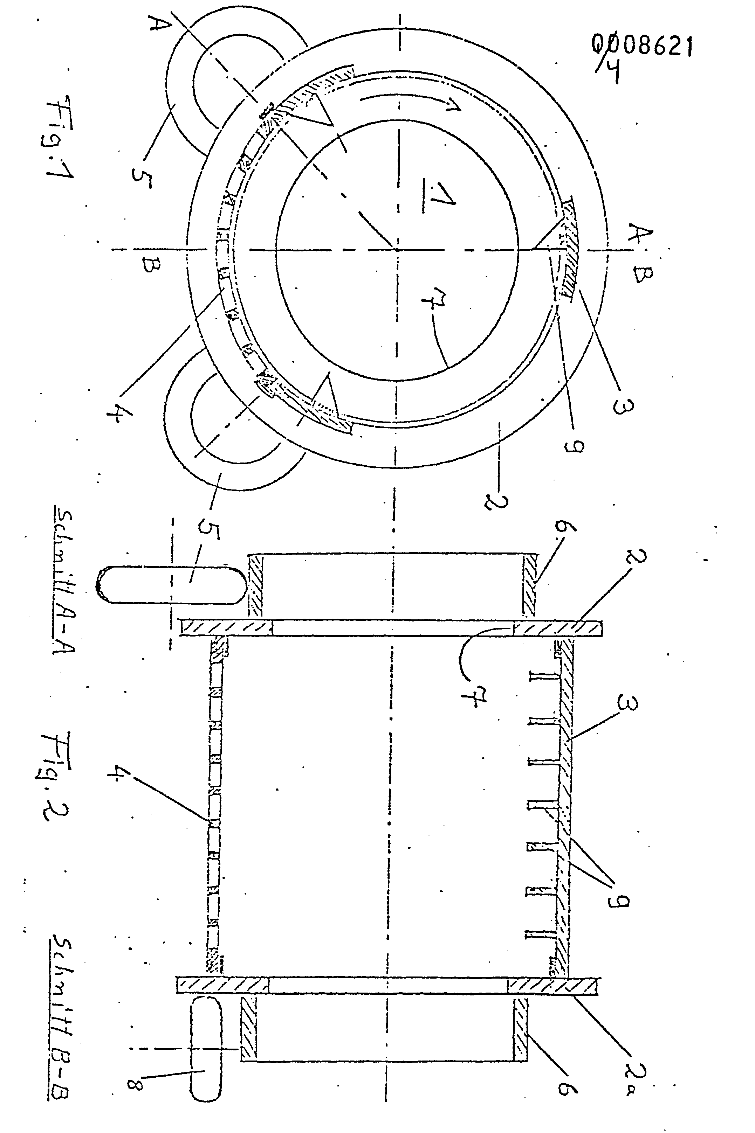

In Figur 1 ist die Trommel 1 aus den Trommelflanschen 2
und 2a gebildet, die mit einem Teil des Trommelmantels bildende, vorzugsweise den Querschnitt eines Zylindermantelsegmentes aufweisende Längsträger 3 miteinander verbunden
sind. An diesen Längsträgern 3 und den Trommelflanschen 2
und 2a sind die Siebsegmente 4 leicht auswechselbar angeschraubt, wie in Figur 1 nur in der unteren Bildhälfte
dargestellt ist.

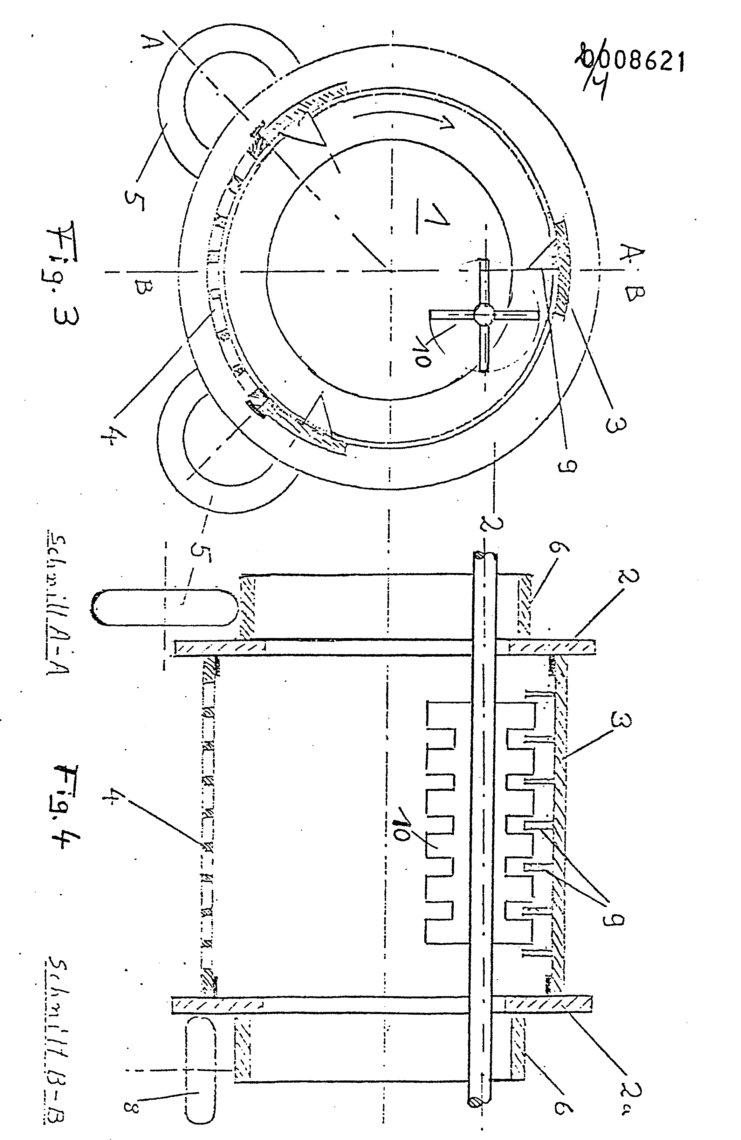

Die Laufräder 5 wälzen sich auf Laufringen 6, die an den
Trommelflanschen 2 und 2a außerhalb des Siebbereiches angeordnet sind. Dies ist insbesondere in der Figur 2 ersichtlich. Außerdem haben die Laufringe 6 vorzugsweise wesentlich kleinere Durchmesser als der Siebmantel 3, 4 des Trommelsiebes 1. Die blendenförmigen Ein- und Auslaßöffnungen 7 an den Trommelflanschen 2 und 2a haben ebenfalls einen kleineren Durchmesser als der Siebmantel 3, 4 und verhindern somit einen axialen Überlauf des Siebgutes aus der Trommel 1.

Die im Betrieb etwas schräg geneigt gelagerte Trommel 1 stützt sich gegen ein Stützrad 8 ab, das sich unmittelbar gegen den Trommelflansch 2a an der Gutauslaufseite der Trommel 1 abwälzt.

An den Längsträgern 3 sind als Hubelemente und gleichzeitig Vorzerkleinerungselemente für das in der Trommel umzuwälzende Gut sägezahnförmige Mitnehmerplatten 9 angeordnet, die vorzugsweise mit nicht dargestellten Rührarmen, geschlitzten Schleuderplatten, Reinigungsvorrichtungen oder dergl. kämmen.

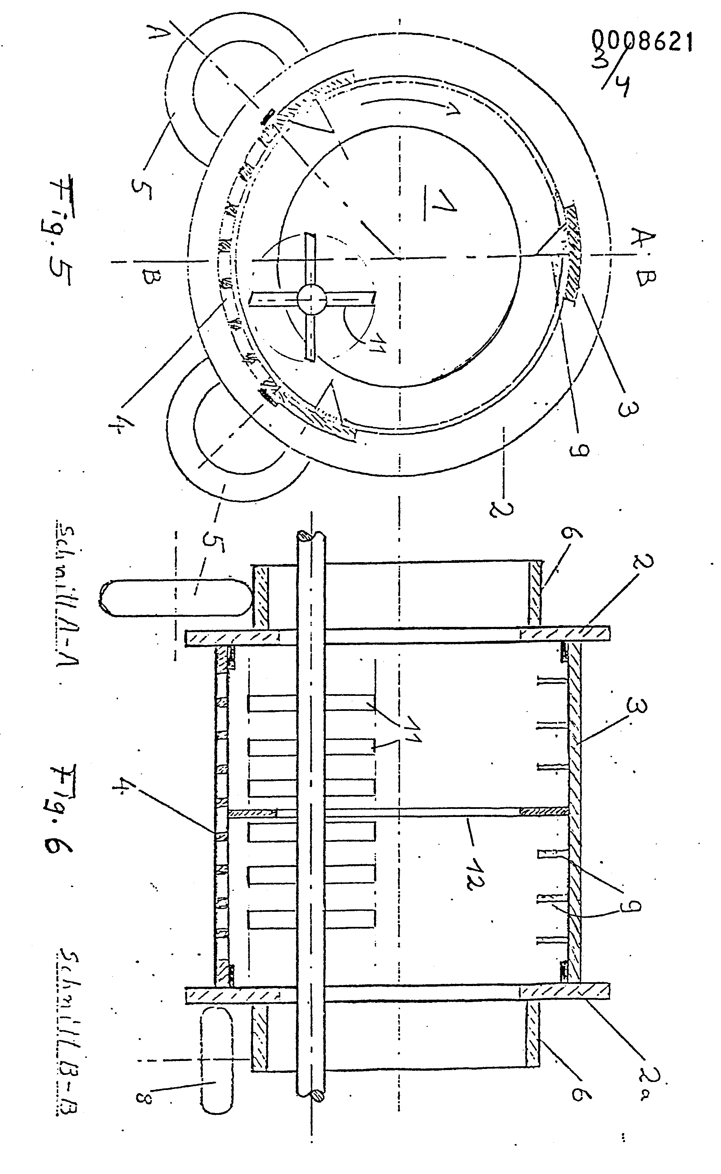

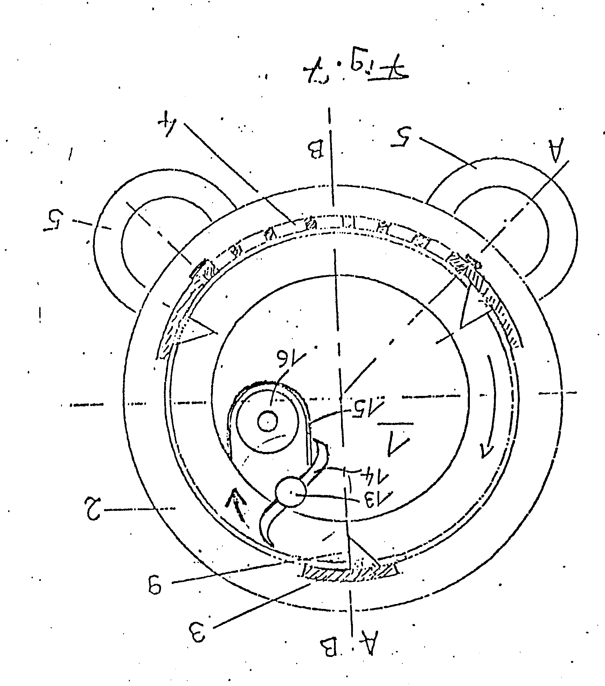

In den Figuren 3 und 4 ist eine ähnliche Anordnung dargestellt, in der auf einer Bearbeitungswelle umlaufende Prallflächen 10 angeordnet sind, die im dargestellten Beispiel geschlitzt sind und mit den sägezahnförmigen Mitnehmerplatten 9 kämmen.

Die Figuren 5 und 6 zeigen eine ähnliche Anordnung, in der schematisch dargestellt an einer Bearbeitungswelle Rührwerksarme 11 angeordnet sind, die mit den sägezahnförmigen Mitnehmerplatten 9 kämmen. Zusätzlich ist in diesem Beispiel der Innenraum der Trommelsiebmaschine durch einen blendenförmigen Mittelflansch 12 in zwei Siebräume ggf. mit unterschiedlicher Lochung aufgeteilt.

In Figur 7 ist im Querschnitt die Kombination eines Trommelsiebes mit einer Mischtrommel schematisch angedeutet. Die auf den Laufringen 6 sich auf den Laufrädern 5 abstützende Siebtrommel mit den Siebsegmenten 4 dreht sich in

0008621

Laufrichtung gemäß dem Pfeil gegen die Spitzen der auf
einer Bearbeitungswelle 13 aufgereihten S-förmigen Haken 14,
die sich periodisch in gleicher Richtung wie die Trommel
drehen und dabei das aufgespießte Gut, wie Textilfetzen,
Plastikfolien oder Gartensträucher, über einen Abstreifkamm
15 beispielsweise in eine Förderschnecke 16 abwerfen.

Die Figuren zeigen nur an einigen Beispielen in schematischer Weise, wie eine erfindungsgemäße Trommelsiebmaschine
eingerichtet sein kann.

Durch eingebaute Zerkleinerungselemente klassierende und
sortierende Trommelsiebmaschine, insbesondere für Hausmüll

Patentansprüche:

1.) Durch eingebaute Zerkleinerungselemente klassierende
und sortierende Trommelsiebmaschine, insbesondere für
Hausmüll, in die axparallel eingebaute umlaufende Reinigungsbürsten eingebaut werden können, gekennzeichnet
durch folgende Merkmale:

a) Das Verhältnis von Trommeldurchmesser zu Trommellänge
liegt vorzugsweise im Bereich zwischen 1:1 und 1:2.

b) Die Umfangsgeschwindigkeit bzw. Drehzahl der Trommel
entspricht einem Wert, der nur etwa 20 bis 50 %
unter der "Schleuderdrehzahl" liegt, bei der alle
Teile am Trommelinnenumfang fest "kleben" bleiben
würden.

c) Zur Zerkleinerung von Papier- und Plastik-Säcken
oder Beuteln und gepreßter Ballen sowie zur verbesserten Gutumwälzung in der Trommel sind zwischen
Siebsegmenten des Trommelumfanges axial streifenförmig aufgereihte Mitnehmerbleche wie nach innen gerichtete, scharfkantige Sägezähne angeordnet.

d) Zu weiteren, ggf. selektiv wirksamen Zerkleinerungsaufgaben sowie zu teilweise an sich bekannten Reinigungszwecken sind axparallele Bearbeitungswellen,
ggf. exzentrisch zur Trommelachse, in der Trommel
angeordnet und stirnseitig außerhalb der Trommel am
Gestell gelagert.

e) Am Ein- und Auslauf sowie zwischen eventuellen axial
abgeteilten Sieb-Sektionen mit unterschiedlicher
Lochung ist das Siebgut nach außen oder zwischen den Sektionen innerhalb der Trommel durch flanschartige
Blenden abgeteilt, deren Innendurchmesser kleiner
ist als der Durchmesser des Siebtrommelmantels.

2.) Trommelsiebmaschine nach Anspruch 1, dadurch gekennzeichnet, daß zur selektiv wirksamen Zerkleinerung spröder Hartstoffe im Abfallgemisch, wie Glas, Porzellan,
Ziegelsteine aus Bauschutt etc., an einer mit mäßiger
Geschwindigkeit axparallel in der Trommel umlaufenden
Bearbeitungswelle Prallflächen bzw. Prallflügel angeordnet sind, die im herabfallenden Gutstrom innerhalb
der Trommel wirksam sind.

3.) Trommelsiebmaschine nach Anspruch 1 oder Anspruch 1
und 2, dadurch gekennzeichnet, daß zur Reinigung der
Siebsegmente vorzugsweise bei großer Sieblochung von
in den Stegen zwischen den Löchern hängenden Textilabfällen, Folien, Gartensträuchern etc. auf einer Bearbeitungswelle aufgereihte, etwa S-förmig gestaltete
und mit den sägezahnförmigen Mitnehmerblechen in der
Trommel kämmende Haken aufgereiht sind, deren Spitzen
der Trommeldrehrichtung entgegen weisen und die sich
periodisch durch eine Teildrehung der Bearbeitungswelle
durch einen Abstreifkamm bewegen.

4.) Trommelsiebmaschine nach Anspruch 1 oder 1 bis 3, dadurch gekennzeichnet, daß zur Zerkleinerung durch
Feuchtigkeit aufgeweichter Papier- und Pappenabfälle
im Müllgemisch an einer oder mehreren Bearbeitungswellen Rührwerksarme angeordnet sind, die mit den sägezahnförmigen Mitnehmerblechen am Trommelinnenumfang
kämmen.

5.) Trommelsiebmaschine nach den Ansprüchen 1 bis 4, dadurch gekennzeichnet, daß zwischen Endflanschen an den Trommelstirnseiten und den Siebsegmenten ungelochte Längsträger angeordnet sind, an deren dem Trommelinnenumfang in der Wölbung angepaßten Innenseite die sägezahnförmigen Mitnehmerbleche reihenweise befestigt, z.B. angeschweißt sind.

6.) Trommelsiebmaschine nach den Ansprüchen 1 bis 5, dadurch gekennzeichnet, daß zwischen den stirnseitigen Endflanschen, ggf. in mehrere Sektionen unterteilende Mittelflansche sowie den Längsträgern mit sägezahnförmigen Mitnehmerblechen die Siebsegmente leicht auswechselbar, z.B. von außen angeschraubt, angeordnet sind.

7.) Trommelsiebmaschine nach den Ansprüchen 1 bis 6, dadurch gekennzeichnet, daß die ungelochten Laufringe für die tragenden und antreibenden Laufräder, - vorzugsweise gummibereifte LKW- oder Gabelstapler-Räder, - außerhalb der Stirnflansche mit blendenförmiger Öffnung zum Trommelinnenraum angeordnet sind und vorzugsweise einen kleineren Durchmesser aufweisen als dem Trommelsiebdurchmesser entspricht.

Fig.1

Schnitt A-A  Fig.2  Schnitt B-B

Fig. 3

Schnitt A-A          Fig. 4          Schnitt B-B

A B

3

9

2

1

11

A

B

5

4

**Fig. 5**

2

3

9

2a

6

6

12

11

5

4

8

Schnitt A-A

**Fig. 6**

Schnitt B-B

Fig. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 517 487</u> (WALTERS)<br>* Von Seite 8 bis Ende; Abbildungen 2-5 * | 1,5 |
| | <u>DE - A - 2 554 853</u> (PENNSYLVANIA CRUSHER)<br>* Seite 19, zweiter Absatz; Seite 20, erster Absatz; Seite 21, zweiter Absatz; Seite 24, zweiter Absatz - Seite 25, zweiter Absatz; Abbildungen 3,7,8 * | 1,2,5 |
| | <u>FR - A - 2 357 305</u> (LAMORT)<br>* Seite 1, Zeilen 1-8; Seite 1, Zeile 23 - Seite 4, Zeile 35; Abbildungen 1,2 * | 1,3,4,5 |
| | <u>US - A - 3 491 958</u> (ZUCCHINI)<br>* Spalte 3, Zeilen 5-27; Figuren 1,2 * | 1,5,7 |
| | <u>US - A - 3 786 870</u> (LIST)<br>* Spalte 2, Zeile 37 - Spalte 3, Zeile 39; Figur 5 * | 1,7 |
| | <u>FR - A - 1 041 033</u> (MAGNANI)<br>* Seite 1, letzter Absatz - Seite 2, erster Absatz; Seite 2, linke Spalte, letzter Absatz; rechte Spalte, erster Absatz; Abbildungen 5,6 * | 1,4,5 |

**KLASSIFIKATION DER ANMELDUNG (Int.Cl. 3)**

```
B 07 B   1/24
B 03 B   9/06
B 02 C  18/40
```

**RECHERCHIERTE SACHGEBIETE (Int. Cl. 3)**

```
B 07 B   1/24
         1/22
         1/20
         9/02
        13/00
B 03 B   9/06
B 02 C  13/13
        18/40
```

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-11-1979 | LAPEYRONNIE |

EPA form 1503.1  06.78